# FASCICULE DE BREVET EUROPEEN

(11) **EP 3 915 064 B1**
(45) Date de publication et mention de la délivrance du brevet: **30.09.2026**
(21) Numéro de dépôt: 20700754.3
(22) Date de dépôt: 21.01.2020
(51) Int. Cl.: G06Q 10/00, G06Q 10/08, G06Q 10/0833, G06Q 10/30

(54) **TRAÇABILITÉ DES DÉCHETS NUCLÉAIRES PAR LA TECHNOLOGIE BLOCKCHAIN**
RÜCKVERFOLGBARKEIT VON NUKLEAREM ABFALL MITTELS BLOCKCHAINTECHNOLOGIE
TRACEABILITY OF NUCLEAR WASTE BY MEANS OF BLOCKCHAIN TECHNOLOGY

(30) Priorité: 22.01.2019 FR 1900528
(43) Date de publication de la demande: 01.12.2021
(73) Titulaire: Soletanche Freyssinet, 92500 Rueil Malmaison (FR)
(72) Inventeur: LANCIA, Bruno, 13009 MARSEILLE (FR)
(74) Mandataire: Ipsilon
(86) Numéro de dépôt international: PCT/EP2020/051435
(87) Numéro de publication internationale: WO 2020/152182

(56) Documents cités:
- CN-A- 108 364 181
- CN-A- 108 830 447
- FR-A1- 2 936 611
- US-A1- 2018 276 597
- KENDZIERSKYJ STEFAN ET AL: "The Role of Blockchain in Supporting Critical National Infrastructure", 2019 IEEE 12TH INTERNATIONAL CONFERENCE ON GLOBAL SECURITY, SAFETY AND SUSTAINABILITY (ICGS3), IEEE, 16 January 2019 (2019-01-16), pages 208 - 212, XP033537439, [retrieved on 20190410], DOI: 10.1109/ICGS3.2019.8688026
- ANONYMOUS: "Blockchain for Traceability in Minerals and Metals Supply Chains: Opportunities and Challenges", 20 December 2017 (2017-12-20), XP055607065, Retrieved from the Internet <URL:https://www.rcsglobal.com/wp-content/uploads/2018/09/ICMM-Blockchain-for-Traceability-in-Minerals-and-Metal-Supply-Chains.pdf> [retrieved on 20190718]
- PATRICK LAURENT ET AL: "Continuous interconnected supply chain - Using Blockchain & Internet-of-Things in supply chain traceability", 5 November 2018 (2018-11-05), XP055607057, Retrieved from the Internet <URL:https://www2.deloitte.com/content/dam/Deloitte/lu/Documents/technology/lu-blockchain-internet-things-supply-chain-traceability.pdf> [retrieved on 20190718]
- SAVEEN A. ABEYRATNE . ET AL: "BLOCKCHAIN READY MANUFACTURING SUPPLY CHAIN USING DISTRIBUTED LEDGER", IJRET: INTERNATIONAL JOURNAL OF RESEARCH IN ENGINEERING AND TECHNOLOGY, vol. 05, no. 09, 25 September 2016 (2016-09-25), Bangalore, India, pages 1 - 10, XP055541754, ISSN: 2321-7308, DOI: 10.15623/ijret.2016.0509001
- ANONYMOUS: "Blockchain: the solution for transparency in product supply chains", 21 November 2015 (2015-11-21), XP055392270, Retrieved from the Internet <URL:www.prvenance.org/whitepaper> [retrieved on 20170719]
- ANONYMOUS: "Decommissioning in France", INTERNET CITATION, 1 July 2006 (2006-07-01), pages 1 - 13, XP002526306, Retrieved from the Internet <URL:http://www.nea.fr/html/rwm/wpdd/france.pdf> [retrieved on 20090405]
- WESTERKAMP MARTIN ET AL: "Blockchain-Based Supply Chain Traceability: Token Recipes Model Manufacturing Processes", 2018 IEEE INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 30 July 2018 (2018-07-30), pages 1595 - 1602, XP033556345, DOI: 10.1109/CYBERMATICS_2018.2018.00267

## Description

### Domaine technique

La présente invention se rapporte au domaine du traitement des déchets nucléaires, et en particulier à la problématique du suivi et de la traçabilité des déchets.

### Technique antérieure

Un des principaux enjeux de l'industrie nucléaire concerne la gestion des déchets. La nature des produits concernés impose une documentation parfaitement rigoureuse de leur état d'origine, de l'ensemble des opérations qu'ils subissent, et de leur évolution dans le temps. Cette gestion doit par conséquent s'accompagner de procédures permettant d'assurer la traçabilité des données issues de différentes étapes du traitement des déchets, tout en garantissant la fiabilité de chacune de ces étapes. En particulier, une des principales difficultés est relative à la gestion de données en provenance d'un nombre important d'acteurs, opérant très souvent de façon isolée et avec des pratiques fortement hétérogènes. En outre, la durée des opérations peut être extrêmement longue, potentiellement supérieure à la pérennité d'un organisme, d'une entreprise ou d'une personne morale.

Il est connu de renseigner les données issues du traitement des déchets dans des registres papiers. Cette solution n'est cependant pas sans présenter un certain nombre d'inconvénients. Ainsi, le risque de perte de données est important, et il est en outre difficile de partager des registres papiers lors de l'intervention d'une multitude d'acteurs qui opèrent de manière isolée. Bien que la digitalisation permette des gains majeurs sur la durée de vie des supports et leur simplicité d'exploitation, il subsiste un besoin pour garantir la pérennité de la qualité de la donnée elle-même, c'est-à-dire sa robustesse à l'altération ou à la modification, intentionnelle ou non, sur une durée très importante et dans un écosystème aux intérêts divergents.

L'article S.A. Abeyratne et al « Blockchain ready manufacturing supply chain using distributed ledger" IRJET, vol 5, N°9, 25/9/16, décrit des usages de la blockchain.

Un des buts de l'invention est de minimiser les risques de pertes d'informations et/ou de propagation d'erreurs, et de faciliter le traitement des déchets.

Un autre but de l'invention est de garantir la pérennité des données et de les protéger contre la falsification et la modification.

### Exposé de l'invention

L'invention vise à atteindre ces objectifs et elle y parvient grâce à un procédé de traçabilité de déchets nucléaires au sein d'une chaîne d'acteurs participant à leur traitement, dans lequel on enregistre ou on permet auxdits acteurs d'enregistrer de façon sécurisée et irréversible des informations relatives à la radioactivité desdits déchets, aux opérations effectuées sur ces déchets et à leur transport et stockage dans une blockchain.

Par *« traitement ou gestion des déchets »* on entend la collecte, le transport, la valorisation et l'élimination des déchets et, plus largement, toute activité participant de l'organisation de la prise en charge des déchets depuis leur production jusqu'à leur traitement final, notamment leur stockage.

Par « *acteur de la chaîne d'acteurs* » on désigne une personne physique ou morale ou encore un système automatisé ou non effectuant des opérations de traitement des déchets. Les acteurs peuvent correspondre notamment à des producteurs de déchets, à des transporteurs et/ou à des prestataires de traitement et de stockage.

La présente invention se base sur la technologie de la blockchain pour le stockage et la transmission d'informations. L'avantage inhérent à cette technologie est qu'elle permet de garantir la pérennité des données tout en les protégeant contre la falsification et la modification, ce qui permet in fine d'assurer efficacement la traçabilité des déchets nucléaires.

Une blockchain désigne un registre distribué et partagé sur un réseau informatique qui dans le cas de l'invention est modifié par plusieurs acteurs du domaine des déchets nucléaires. Chaque acteur peut posséder au moins un ordinateur connecté au réseau informatique. La blockchain peut être mémorisée sur au moins un ordinateur parmi ceux des acteurs impliqués, ou de préférence sur les ordinateurs de l'ensemble des acteurs.

La blockchain est généralement utilisée en combinaison avec un protocole d'écriture/lecture et de validation cryptographique des transactions qui sont effectuées sur le réseau informatique. La blockchain peut faire appel à des nœuds validateurs du réseau, en nombre variable, configurés pour pouvoir valider et agréger les différentes transactions au sein de blocs. Après enregistrement des transactions les plus récentes, un nouveau bloc peut être traité par les nœuds validateurs. Si le bloc est valide, ce dernier peut être horodaté et ajouté à la blockchain, ce qui permet de porter l'intégralité des transactions à la connaissance des utilisateurs du réseau. Une fois ajouté à la blockchain, un bloc ne peut plus être modifié ou supprimé, ce qui permet de garantir l'authenticité et la sécurité de la blockchain. Des détails sur la technologie BlockChain peuvent être trouvés par exemple dans les ouvrages : Zheng, Zibin, et al. "Blockchain challenges and opportunities: A survey." Work Pap.-2016 (2016) et Pilkington, Marc. "11 Blockchain technology: principles and applications." Research handbook on digital transformations (2016).

Dans la présente invention, la blockchain est, de préférence, une blockchain privée. Un exemple de blockchain privée est la blockchain « Hyperledger Fabric » développée par la société IBM.

Dans ce type de blockchain, les permissions d'accès, de lecture et de vérification du registre de la blockchain sont contrôlées de manière stricte et limitées à un nombre restreint d'acteurs. Les permissions peuvent être accordées par une ou plusieurs entités administrant ledit réseau.

Les opérations de validation sont, de préférence, réalisées par un nombre limité et prédéfini de nœuds validateurs. Par exemple, les opérations de validation sont réalisées par la ou les entités administrant le réseau.

En variante, la blockchain est une blockchain publique.

On peut enregistrer ou on peut permettre d'enregistrer dans la blockchain des informations relatives à l'origine des déchets, notamment la localisation du site de production et des informations relatives au producteur des déchets.

On peut enregistrer ou on peut permettre d'enregistrer dans la blockchain des informations relatives aux caractéristiques physiques et/ou radiologiques des déchets.

Les caractéristiques physiques peuvent comporter des informations relatives à la forme des déchets, notamment leurs dimensions géométriques, le ou les matériaux constitutifs, et leur quantité, notamment leur poids.

Les caractéristiques radiologiques peuvent comporter des informations relatives au spectre radiologique, à la nature et/ou au niveau de contamination, notamment lorsque le déchet est un corps creux, et/ou aux activités volumiques et/ou surfaciques.

L'invention permet d'accroître facilement le nombre d'informations pouvant être tracées. On peut ainsi enregistrer ou on peut permettre d'enregistrer dans la blockchain des informations relatives au(x) dispositifs de mesure utilisés, en particulier les dispositifs utilisés pour mesurer l'activité desdits déchets. Il est alors avantageux que le ou les dispositifs de mesure soient configurés pour enregistrer automatiquement les résultats et/ou conditions de mesures dans la blockchain. Cela permet de réduire le risque d'erreur de saisie et d'accroître la fiabilité et/ou la précision des données entrées dans la blockchain. De plus, un enregistrement automatisé réduit le temps de mise à jour, ce qui peut accélérer la circulation des déchets.

On peut enregistrer ou on peut permettre d'enregistrer dans la blockchain des informations relatives aux opérations de conditionnement des déchets.

On peut enregistrer ou on peut permettre d'enregistrer dans la blockchain des informations relatives aux opérations de préparation de colis à partir des déchets, notamment des informations relatives à la cimentation et/ou à l'enrobage des déchets.

Le procédé selon l'invention peut comporter un cryptage des informations, par exemple un cryptage asymétrique. Cela permet de garantir que celles-ci n'ont pas été modifiées.

La blockchain peut être adaptée pour ne permettre le décryptage d'une information donnée qu'en un nœud prédéfini correspondant. Cela permet de préserver un secret professionnel et de maintenir une confidentialité en cas de traitement de litige, par exemple.

On peut enregistrer ou on peut permettre d'enregistrer dans la blockchain une ou plusieurs empreintes numériques correspondant aux informations relatives à la radioactivité desdits déchets, aux opérations effectuées sur ces déchets et à leur transport et stockage.

La ou les empreintes numériques peuvent être obtenues en appliquant un algorithme de hachage, par exemple l'algorithme SHA256.

On peut générer au moins un identifiant unique associé à un déchet et/ou colis, à partir des données enregistrées dans la blockchain.

L'identifiant peut comporter un code lisible optiquement, notamment un code à barres ou un code matriciel, en particulier un QR code. De préférence, cet identifiant est réalisé de façon à pouvoir être lu sur une longue durée. Il peut s'agir d'un identifiant gravé par laser sur un substrat en verre ou métallique.

On peut munir au moins l'un desdits déchets d'un ou plusieurs capteurs connectés configurés pour enregistrer automatiquement dans la blockchain leurs données. Cela permet de renforcer la sécurité du suivi des déchets, qui peut s'effectuer notamment en temps réel sur un territoire entier, si les capteurs connectés sont réalisés en conséquence. Les capteurs sont par exemple munis d'une interface de communication à faible consommation électrique et à longue portée pour transmettre leurs données, par exemple du type LORA ou similaire. Le cas échéant, l'énergie nécessaire au fonctionnement du ou des capteurs est obtenue à l'aide d'un générateur utilisant la chaleur dégagée par les déchets.

On peut aussi enregistrer ou on peut permettre d'enregistrer dans la blockchain des informations relatives aux déchets sous la forme de scans de documents et/ou de photographies.

L'invention a encore pour objet, selon un autre de ses aspects, un procédé d'acquisition de données numériques relatives à des déchets nucléaires tracés par la mise en œuvre du procédé de traçabilité tel que défini ci-dessus, dans lequel on interroge la blockchain pour recevoir en retour au moins une information relative notamment à la radioactivité d'un déchet et/ou aux opérations effectuées sur ce déchet et/ou à son transport et stockage.

Un identifiant du déchet peut être lu préalablement à l'interrogation de la blockchain, cette dernière pouvant notamment s'effectuer automatiquement par un lecteur de l'identifiant, notamment un lecteur optique ou radiofréquence.

L'invention a encore pour objet, selon un autre de ses aspects, un système informatique pour la traçabilité de déchets nucléaires au sein d'une chaîne d'acteurs participant à leur traitement, pour la mise en œuvre du procédé de traçabilité selon l'invention tel que défini ci-dessus, le système comportant un réseau informatique configuré pour permettre auxdits acteurs de s'identifier et d'entrer leurs données et comportant des nœuds validateurs pour assurer des opérations de validation et d'enregistrement de ces données dans une blockchain. Le système peut comporter au moins un dispositif de mesure configuré pour enregistrer automatiquement les résultats et/ou conditions de mesure dans la blockchain.

Le système peut comporter au moins un lecteur d'un identifiant d'un déchet, configuré pour interroger automatiquement la blockchain suite à la lecture de l'identifiant, afin de permettre de récupérer des informations associées à ce déchet, notamment relatives à un historique des opérations effectuées sur ce déchet et/ou relatives à des caractéristiques physiques et/ou radiologiques de ce déchet.

Le système peut être configuré pour ne permettre le décryptage d'une information donnée qu'en un nœud prédéfini correspondant. Cela permet de préserver un secret professionnel et de maintenir une confidentialité en cas de traitement de litige, par exemple.

### Brève description des dessins

L'invention pourra être mieux comprise à la lecture de la description détaillée qui va suivre, d'un exemple de mise en œuvre non limitatif de celle-ci, et à l'examen du dessin annexé, sur lequel
[Fig 1] la figure 1 est un exemple représenté de façon très schématique de système informatique pour la mise en œuvre de l'invention,
[Fig 2] la figure 2 est un exemple de blockchain selon l'invention,
[Fig 3] la figure 3 est un schéma en blocs illustrant un exemple de procédé de traçabilité selon l'invention, et
[Fig 4] la figure 4 est un schéma en blocs illustrant un exemple de procédé d'acquisition selon l'invention.

### Description détaillée

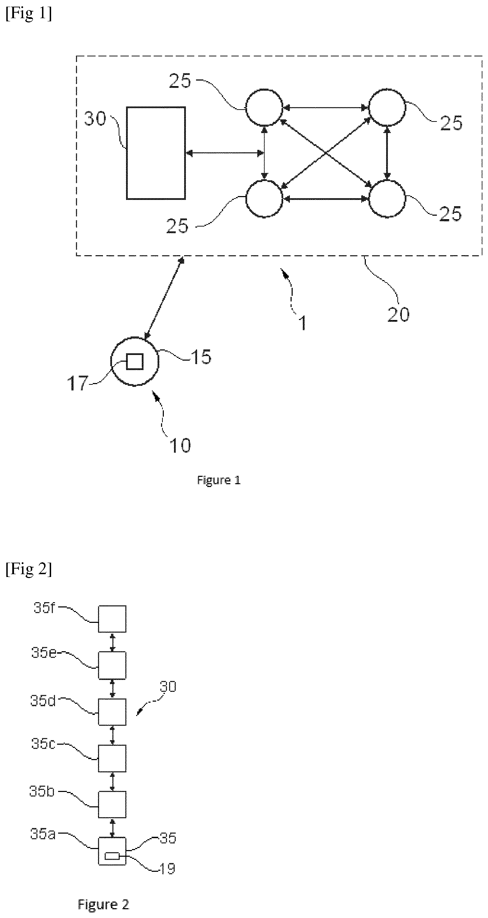

On va décrire en référence aux figures 1 à 3 un exemple de mise en œuvre d'un procédé de traçabilité selon l'invention.

A l'étape 101, un acteur 15 de la chaîne d'acteurs, par exemple le producteur des déchets, se connecte à un réseau informatique 20 via un ordinateur 17 et effectue une transaction 19 dans une blockchain 30 dans le but d'enregistrer des données relatives aux déchets nucléaires dans celle-ci.

Comme illustré à la figure 2, la blockchain 30 comporte une pluralité de blocs 35. Selon l'exemple représenté, la blockchain 30 comporte à un instant donné six blocs 35a-f ordonné du premier bloc 35a jusqu'au dernier bloc créé 35f.

Chaque bloc 35 inclut au moins une transaction 19. Chaque transaction 19 comporte des données destinées à être mises à disposition dans le réseau 20. Ces données peuvent prendre la forme d'une donnée en tant que telle, par exemple un fichier informatique, ou d'une empreinte numérique de cette donnée. L'empreinte numérique peut être obtenue en appliquant un algorithme de hachage connu, par exemple l'algorithme SHA256.

La transaction 19 peut comporter en outre une information relative à l'identité de l'acteur 15 à l'origine de cette transaction.

Les données destinées à être mises à disposition dans le réseau 20 peuvent correspondre par exemple à des informations relatives à l'origine des déchets, notamment la localisation du site de production et des informations relatives au producteur des déchets. Ces données peuvent en outre comporter des informations relatives aux caractéristiques physiques et/ou radiologiques des déchets.

Les caractéristiques physiques correspondent notamment à des informations relatives à la forme des déchets, notamment leurs dimensions géométriques, le ou les matériaux constitutifs, et leur quantité, notamment leur poids.

Les caractéristiques radiologiques sont par exemple des informations relatives au spectre, à la nature et/ou au niveau de contamination, notamment lorsque le déchet est un corps creux, et/ou aux activités volumiques et/ou surfaciques.

L'acteur 15 peut également enregistrer dans la blockchain 30 des informations relatives au(x) dispositifs de mesure utilisés, en particulier les dispositifs utilisés pour mesurer l'activité desdits déchets.

Dans un mode de réalisation préférentiel, le ou les dispositifs de mesure sont configurés pour enregistrer automatiquement les résultats et/ou conditions de mesures dans la blockchain 30.

Les données peuvent également comporter des informations relatives aux opérations de conditionnement des déchets et/ ou aux opérations de préparation de colis à partir des déchets, notamment des informations relatives à la cimentation et/ou à l'enrobage des déchets.

Toutes ces données sont, de préférence, cryptées au moyen d'un procédé de cryptage connu de l'homme du métier.
A l'étape 103, le bloc 35 est validé par des nœuds validateurs 25 du réseau 20.

A l'étape 105, le nouveau bloc est horodaté et annexé à la blockchain 30. Pour cela des algorithmes d'horodatage usuels peuvent être utilisés.

Il est possible de générer au moins un identifiant unique associé à un déchet et/ou colis, à partir des données enregistrées dans la blockchain 30. L'identifiant peut comporter un code lisible optiquement, notamment un code à barres ou un code matriciel, en particulier un QR code. L'identifiant peut aussi être un code contenu dans un tag radiofréquence.

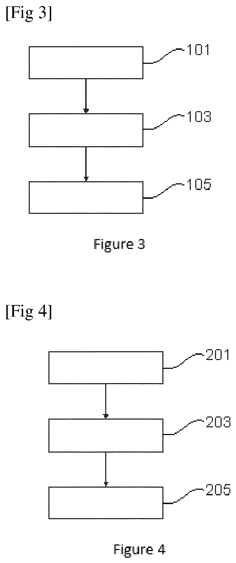

Cet identifiant peut être utilisé pour accéder à tout moment à l'historique du déchet et/ ou colis, comme illustré à la figure 4.

A l'étape 201, on lit l'identifiant, cette lecture pouvant notamment s'effectuer automatiquement par un lecteur de l'identifiant, notamment un lecteur optique ou radiofréquence.

A l'étape 203, on interroge la blockchain 30 en utilisant les informations de l'identifiant pour recevoir en retour au moins une information relative au déchet, par exemple concernant sa radioactivité, les opérations déjà effectuées sur ce déchet, notamment relatives à sa transformation, son conditionnement, son transport ou son stockage.

A l'étape 205, on récupère les données relatives au déchet et/ou colis.

## Revendications

1. Procédé de traçabilité de déchets nucléaires au sein d'une chaîne (10) d'acteurs (15) participant à leur traitement, dans lequel on enregistre ou on permet auxdits acteurs d'enregistrer de façon sécurisée et irréversible des informations relatives à la radioactivité desdits déchets, aux opérations effectuées sur ces déchets et à leur transport et stockage dans une blockchain (30), notamment une blockchain privée,
procédé dans lequel on enregistre dans la blockchain (30) des informations relatives au(x) dispositifs de mesure utilisés pour mesurer la radioactivité desdits déchets, le ou les dispositifs de mesure étant configurés pour enregistrer automatiquement les résultats et/ou conditions de mesure dans la blockchain.

2. Procédé selon la revendication 1, dans lequel on enregistre dans la blockchain (30) des informations relatives à l'origine des déchets, notamment la localisation du site de production et des informations relatives au producteur des déchets.

3. Procédé selon l'une des revendications 1 et 2, dans lequel on enregistre dans la blockchain (30) des informations relatives aux caractéristiques physiques et/ou radiologiques des déchets, les caractéristiques physiques comportant de préférence des informations relatives à la forme des déchets, notamment leurs dimensions géométriques, le ou les matériaux constitutifs, et leur quantité, notamment leur poids.

4. Procédé selon l'une des revendications 3 et 4, dans lequel les caractéristiques radiologiques comportent des informations relatives au spectre, à la nature et/ou au niveau de contamination, notamment lorsque le déchet est un corps creux, et/ou aux activités volumiques et/ou surfaciques.

5. Procédé selon l'une quelconque des revendications précédentes, dans lequel on enregistre dans la blockchain (30) des informations relatives aux opérations de conditionnement des déchets.

6. Procédé selon l'une quelconque des revendications précédentes, dans lequel on enregistre dans la blockchain (30) des informations relatives aux opérations de préparation de colis à partir des déchets, notamment des informations relatives à la cimentation et/ou à l'enrobage des déchets.

7. Procédé selon l'une quelconques des revendications précédentes, dans lequel on enregistre dans la blockchain (30) une ou plusieurs empreintes numériques des informations relatives à la radioactivité desdits déchets, aux opérations effectuées sur ces déchets et à leur transport et stockage, la ou les empreintes numériques étant de préférence obtenues en appliquant un algorithme de hachage.

8. Procédé selon l'une quelconque des revendications précédentes, dans lequel on génère au moins un identifiant unique associé à un déchet et/ou colis, à partir des données enregistrées dans la blockchain (30), l'identifiant comportant de préférence un code lisible optiquement, notamment un code à barres ou un code matriciel, en particulier un QR code.

9. Procédé selon l'une quelconque des revendications précédentes, dans lequel on munit au moins l'un desdits déchets d'un ou plusieurs capteurs connectés configurés pour enregistrer automatiquement dans la blockchain (30) leurs données.

10. Procédé selon l'une quelconque des revendications précédentes, dans lequel on enregistre dans la blockchain (30) des informations relatives aux déchets sous la forme de scans de documents et/ou de photographies.

11. Procédé d'acquisition de données numériques relatives à des déchets nucléaires tracés par la mise en œuvre du procédé selon l'une quelconque des revendications précédentes, dans lequel :
- on interroge la blockchain (30) pour recevoir en retour au moins une information relative à la radioactivité d'un déchet et/ou aux opérations effectuées sur ce déchet et/ou à son transport et stockage, un identifiant du déchet étant de préférence lu préalablement à l'interrogation de la blockchain (30), cette dernière pouvant notamment s'effectuer automatiquement par un lecteur de l'identifiant, notamment un lecteur optique ou radiofréquence.

12. Système informatique (1) pour la traçabilité de déchets nucléaires au sein d'une chaîne d'acteurs participant à leur traitement, configuré pour la mise en œuvre du procédé selon l'une quelconque des revendications 1 à 11, le système comportant :
- un réseau informatique (20) configuré pour permettre auxdits acteurs (15) de s'identifier et d'entrer leurs données et des nœuds validateurs (25) du réseau (20) pour assurer les opérations de validation et d'enregistrement de ces données dans une blockchain (30).

13. Système selon la revendication 12, comportant au moins un dispositif de mesure configuré pour enregistrer automatiquement les résultats et/ou conditions de mesures dans la blockchain, et/ou comportant au moins un lecteur d'un identifiant d'un déchet, configuré pour interroger automatiquement la blockchain suite à la lecture de l'identifiant, afin de permettre de récupérer des informations associées à ce déchet, notamment relatives à un historique des opérations effectuées sur ce déchet et/ou relatives à des caractéristiques physiques et/ou radiologiques de ce déchet.

14. Système selon l'une quelconque des revendications 12 à 13, étant configuré pour ne permettre le décryptage d'une information donnée qu'en un nœud prédéfini correspondant.

## Patentansprüche

1. Verfahren zur Rückverfolgbarkeit von nuklearen Abfällen innerhalb einer Kette (10) von Akteuren (15), die an deren Aufbereitung beteiligt sind, wobei Informationen über die Radioaktivität der Abfälle, über die an diesen Abfällen durchgeführten Vorgänge sowie über deren Transport und Lagerung sicher und unwiderruflich in einer Blockchain (30), insbesondere einer privaten Blockchain, gespeichert werden oder den genannten Akteuren die Speicherung dieser Informationen ermöglicht wird,
Verfahren, wobei Informationen bezüglich der zur Messung der Radioaktivität der Abfälle verwendeten Messvorrichtung(en) in der Blockchain (30) gespeichert werden, wobei die Messvorrichtung(en) so konfiguriert ist/sind, dass sie die Messergebnisse und/oder die Messbedingungen automatisch in der Blockchain speichern.

2. Verfahren nach Anspruch 1, wobei Informationen über die Herkunft der Abfälle, insbesondere den Standort der Produktionsstätte und Angaben zum Abfallerzeuger, in der Blockchain (30) gespeichert werden.

3. Verfahren nach einem der Ansprüche 1 und 2, wobei in der Blockchain (30) Informationen über die physikalischen und/oder radiologischen Eigenschaften der Abfälle gespeichert werden, wobei die physikalischen Eigenschaften vorzugsweise Informationen über die Form der Abfälle, insbesondere deren geometrische Abmessungen, das oder die Bestandteile sowie deren Menge, insbesondere deren Gewicht, beinhalten.

4. Verfahren nach einem der Ansprüche 3 und 4, wobei die radiologischen Eigenschaften Informationen über das Spektrum, die Art und/oder den Grad der Kontamination, insbesondere wenn es sich bei dem Abfall um einen Hohlkörper handelt, und/oder über die Volumen- und/oder Oberflächenaktivitäten beinhalten.

5. Verfahren nach einem der vorhergehenden Ansprüche, wobei Informationen bezüglich der Vorgänge zur Aufbereitung der Abfälle in der Blockchain (30) gespeichert werden.

6. Verfahren nach einem der vorhergehenden Ansprüche, wobei Informationen bezüglich der Vorgänge zur Vorbereitung der Bereitstellung von Paketen aus den Abfällen, insbesondere Informationen bezüglich der Zementierung und/oder der Einbettung der Abfälle, in der Blockchain (30) gespeichert werden.

7. Verfahren nach einem der vorhergehenden Ansprüche, wobei in der Blockchain (30) ein oder mehrere digitale Fingerabdrücke der Informationen bezüglich der Radioaktivität der Abfälle, über die an diesen Abfällen durchgeführten Vorgänge sowie über deren Transport und Lagerung gespeichert werden, wobei der oder die digitalen Fingerabdrücke vorzugsweise durch Anwendung eines Hash-Algorithmus gewonnen werden.

8. Verfahren nach einem der vorhergehenden Ansprüche, wobei aus den in der Blockchain (30) gespeicherten Daten mindestens eine eindeutige Kennung erzeugt wird, die einem Abfall und/oder einem Paket zugeordnet ist, wobei die Kennung vorzugsweise einen optisch lesbaren Code aufweist, insbesondere einen Barcode oder einen Matrixcode, insbesondere einen QR-Code.

9. Verfahren nach einem der vorhergehenden Ansprüche, wobei mindestens einer der Abfälle mit einem oder mehreren verbundenen Sensoren versehen ist, die dazu ausgelegt sind, ihre Daten automatisch in der Blockchain (30) zu speichern.

10. Verfahren nach einem der vorhergehenden Ansprüche, wobei Informationen bezüglich der Abfälle in Form von Dokumentenscans und/oder Fotos in der Blockchain (30) gespeichert werden.

11. Verfahren zur Erfassung digitaler Daten über rückverfolgte nukleare Abfälle durch Anwendung des Verfahrens nach einem der vorhergehenden Ansprüche, wobei:
- die Blockchain (30) abgefragt wird, um als Antwort mindestens eine Information über die Radioaktivität eines Abfalls und/oder der an diesem Abfall durchgeführten Vorgänge und/oder seines Transports und seiner Lagerung zu erhalten, wobei vorzugsweise vor der Abfrage der Blockchain (30) eine Kennung des Abfalls gelesen wird, wobei das Lesen der Kennung insbesondere automatisch durch ein Lesegerät, insbesondere ein optisches oder ein Funkfrequenz-Lesegerät, erfolgen kann.

12. Computersystem (1) zur Rückverfolgbarkeit von nuklearen Abfällen innerhalb einer Kette von Akteuren, die an deren Aufbereitung beteiligt sind, das dazu ausgelegt ist, das Verfahren nach einem der Ansprüche 1 bis 11 durchzuführen, wobei das System Folgendes aufweist:
- ein Computernetzwerk (20), das dazu ausgelegt ist, den Akteuren (15) zu ermöglichen, sich zu identifizieren und ihre Daten sowie Validierungsknoten (25) des Netzwerks (20) einzugeben, um die Vorgänge zur Validierung und Speicherung dieser Daten in einer Blockchain (30) sicherzustellen.

13. System nach Anspruch 12, das mindestens eine Messvorrichtung enthält, die so ausgelegt ist, dass sie die Messergebnisse und/oder die Messbedingungen automatisch in der Blockchain speichert, und/oder mindestens ein Lesegerät für eine Abfallkennung, wobei das System so ausgelegt ist, dass es nach dem Lesen der Kennung automatisch die Blockchain abfragt, um Informationen abzurufen, die diesem Abfall zugeordnet sind, insbesondere hinsichtlich einer Historie der an diesem Abfall durchgeführten Vorgänge und/oder hinsichtlich physikalischer und/oder radiologischer Eigenschaften dieses Abfalls.

14. System nach einem der Ansprüche 12 bis 13, das dazu ausgelegt ist, die Entschlüsselung einer bestimmten Information nur an einem entsprechenden vordefinierten Knoten zuzulassen.

## Claims

1. Method for achieving traceability of items of nuclear waste within a chain (10) of actors (15) participating in their processing, in which method information relating to the radioactivity of said items of waste, to operations performed on these items of waste and to their transport and storage are recorded, or said actors are allowed to record said information, in a blockchain (30), especially a private blockchain, securely and irreversibly,
in which method information relating to the one or more measuring devices used to measure the radioactivity of said items of waste is recorded in the blockchain (30), the one or more measuring devices being configured to automatically record measurement conditions and/or results in the blockchain.

2. Method according to Claim 1, wherein information relating to the origin of the items of waste, especially the location of the production site, and information relating to the producer of the items of waste, is recorded in the blockchain (30).

3. Method according to either of Claims 1 and 2, wherein information relating to the physical and/or radiological characteristics of the items of waste is recorded in the blockchain (30), the physical characteristics preferably including information relating to the shape of the items of waste, especially their geometric dimensions, the one or more constituent materials, and their amount, especially their weight.

4. Method according to either of Claims 3 and 4, wherein the radiological characteristics include information relating to the spectrum, to the nature and/or to the level of contamination, especially when the item of waste is a hollow body, and/or to bulk and/or surface activities.

5. Method according to any of the preceding claims, wherein information relating to conditioning operations performed on the items of waste is recorded in the blockchain (30).

6. Method according to any of the preceding claims, wherein information relating to operations for preparing packages from the items of waste, especially information relating to cementation and/or encapsulation of the waste, is recorded in the blockchain (30).

7. Method according to any of the preceding claims, wherein one or more digital fingerprints of the information relating to the radioactivity of said items of waste, to the operations performed on these items of waste and to their transport and storage are recorded in the blockchain (30), the one or more digital fingerprints preferably being obtained by applying a hashing algorithm.

8. Method according to any of the preceding claims, wherein at least one unique identifier associated with an item of waste and/or package is generated from the data recorded in the blockchain (30), the identifier preferably comprising an optically readable code, especially a barcode or a matrix code, in particular a QR code.

9. Method according to any of the preceding claims, wherein at least one of said items of waste is equipped with one or more connected sensors configured to automatically record their data in the blockchain (30).

10. Method according to any of the preceding claims, wherein information relating to the items of waste is recorded in the blockchain (30) in the form of scans of documents and/or photographs.

11. Method for acquiring digital data relating to items of nuclear waste traced by implementing the method according to any of the preceding claims, wherein:
- the blockchain (30) is queried with a view to receiving in return at least one piece of information relating to the radioactivity of an item of waste and/or to operations performed on this item of waste and/or to its transport and storage, an identifier of the item of waste preferably being read before making the query to the blockchain (30), said query especially being able to be made automatically by a reader of the identifier, especially a radio-frequency or optical reader.

12. Computer system (1) for achieving traceability of items of nuclear waste within a chain of actors participating in their processing, configured to implement the method according to any of Claims 1 to 11, the system comprising:
- a computer network (20) configured to allow said actors (15) to identify themselves and enter their data, and network (20) validator nodes (25) for performing operations for validating and recording these data in a blockchain (30).

13. System according to Claim 12, comprising at least one measuring device configured to automatically record measurement conditions and/or results in the blockchain, and/or comprising at least one reader of an identifier of an item of waste, configured to automatically query the blockchain following read-out of the identifier, in order to allow retrieval of information associated with this item of waste, and especially relating to a history of the operations performed on this item of waste and/or relating to radiological and/or physical characteristics of this item of waste.

14. System according to either of Claims 12 and 13, being configured to allow given information to be decrypted only at a corresponding predefined node.
